# EUROPEAN PATENT APPLICATION

(11) **EP 4 675 811 A1**
(43) Date of publication of application: **07.01.2026**
(21) Application number: 24898948.5
(22) Date of filing: 14.08.2024
(51) Int. Cl.: H01M 50/342, F16K 17/16

(54) **EXPLOSION-PROOF VALVE AND BATTERY**

(30) Priority: 07.05.2024 CN 202420976935 U
(71) Applicant: Zhejiang Geely Holding Group Co., Ltd., Hangzhou, Zhejiang 310051 (CN); Viridi Energy Mobility Technology (Ningbo) Co., Ltd., Ningbo, Zhejiang 315336 (CN); ZHEJIANG ZEEKR INTELLIGENT TECHNOLOGY CO., LTD., Ningbo, Zhejiang 315899 (CN)
(72) Inventor: YU, Dongpeng, Hangzhou, Zhejiang 310051 (CN); WANG, Cong, Hangzhou, Zhejiang 310051 (CN); WANG, Jun, Hangzhou, Zhejiang 310051 (CN); LIU, Hang, Hangzhou, Zhejiang 310051 (CN); LIU, Mengsen, Hangzhou, Zhejiang 310051 (CN); WANG, Di, Hangzhou, Zhejiang 310051 (CN); LI, Yanan, Hangzhou, Zhejiang 310051 (CN)
(74) Representative: Michalski Hüttermann & Partner Patentanwälte mbB
(86) International application number: PCT/CN2024/112093
(87) International publication number: WO 2025/232030

(57) **Abstract**

Disclosed are an explosion-proof valve and a battery. The explosion-proof valve includes a main body (100), the main body (100) being provided with a score (200) and a buffer groove (300), both of which are racetrack-shaped. The score (200) includes a deep groove section (220) and a shallow groove section (210), the shallow groove section (210) has a depth of D, a distance between a bottom wall of the shallow groove section (210) and a bottom wall of the main body (100) is T1, and a distance between a bottom wall of the deep groove section (220) and the bottom wall of the main body (100) is T2; and a distance between a bottom wall of the buffer groove (300) and the bottom wall of the main body (100) is T3, wherein D>0, T3>T2, and T1>T2. The explosion-proof valve is provided with the buffer groove (300), so as to prevent fatigue cracking and failure of the score (200) due to excessive stress on the score (200) under the working conditions of battery cell production, pack assembly, and vibration of the whole vehicle. The score (200) can be fractured and opened when the main body (100) is subjected to a pressure above a preset pressure value, thereby ensuring timely pressure relief of the battery cell when the internal air pressure of the battery cell is abnormally increased due to thermal runaway. The score (200) is racetrack-shaped and includes the deep groove section (220) and the shallow groove section (210), which can effectively reduce a set opening pressure of the explosion-proof valve while reducing the manufacturing cost.

## Description

### CROSS-REFERENCE TO RELATED APPLICATIONS

This application claims priority to Chinese Patent Application No. 202420976935.2 filed on May 07, 2024 and entitled "explosion-proof valve and battery", the content of which is incorporated herein by reference in its entirety.

### TECHNICAL FIELD

The present disclosure relates to the field of battery technologies, and in particular to an explosion-proof valve and a battery.

### BACKGROUND

As a key functional part of a battery, an explosion-proof valve can provide a better explosion-proof effect, and ensure the safety of an electric vehicle using a power battery as the energy source. The set opening pressure of the explosion-proof valves varies depending on the model or function of the battery. The set opening pressure of the explosion-proof valves of some batteries needs to be relatively low, but due to the influence of technologies such as processes, the current explosion-proof valves with relatively low set opening pressures have relatively high manufacturing costs.

### SUMMARY

The present disclosure aims to solve at least one of the technical problems existing in the related art. Therefore, the present disclosure provides an explosion-proof valve, which can effectively reduce the manufacturing cost of an explosion-proof valve with a low opening pressure.

The present disclosure further provides a battery including the above explosion-proof valve.

According to embodiments in a first aspect of the present disclosure, an explosion-proof valve includes:
a main body provided with a score and a buffer groove, both the score and the buffer groove being racetrack-shaped,
where the score includes a deep groove section and a shallow groove section, the shallow groove section has a depth of D, a distance between a bottom wall of the shallow groove section and a bottom wall of the main body is T₁, and a distance between a bottom wall of the deep groove section and the bottom wall of the main body is T₂, and
a distance between a bottom wall of the buffer groove and the bottom wall of the main body is T₃,
where D>0, T₃>T₂, and T₁>T₂.

The explosion-proof valve according to the embodiments of the present disclosure has at least the following beneficial effects.

By providing the buffer groove, the stress on the score can be greatly reduced under the working conditions of battery cell production, pack assembly, and vibration of the whole vehicle, so as to prevent fatigue cracking and failure of the score due to excessive stress on the score. The score can be fractured and opened when the main body is subjected to a pressure above a preset pressure value, thereby ensuring timely pressure relief of the battery cell when the internal air pressure of the battery cell is abnormally increased due to thermal runaway, and preventing the explosion of the battery cell. The score is racetrack-shaped and includes the deep groove section and the shallow groove section, and the depth of the shallow groove section is not zero, which can effectively reduce the set opening pressure of the explosion-proof valve while reducing the manufacturing cost.

According to some embodiments of the present disclosure, the distance T₁ between the bottom wall of the shallow groove section and the bottom wall of the main body and the distance T₃ between the bottom wall of the buffer groove and the bottom wall of the main body satisfy: T₃ > T₁.

According to some embodiments of the present disclosure, the score is provided at a periphery of the buffer groove, or the buffer groove is provided at a periphery of the score.

According to some embodiments of the present disclosure, a length of the shallow groove section is 1/10 to 1/3 of a total length of the score.

According to some embodiments of the present disclosure, the shallow groove section has an inverted-trapezoidal cross-section, and/or the deep groove section has an inverted-trapezoidal cross-section.

According to some embodiments of the present disclosure, the score has a width of 0.2 mm to 0.6 mm at a top thereof.

According to some embodiments of the present disclosure, the shallow groove section has a width of W₁ at a top thereof, and the deep groove section has a width of W₂ at a top thereof, where W₁ = W₂.

According to some embodiments of the present disclosure, the distance T₁ between the bottom wall of the shallow groove section and the bottom wall of the main body has a value ranging from 30µm to 100µm.

According to some embodiments of the present disclosure, a depth of the buffer groove is greater than that of the score, and/or a width of the buffer groove is greater than that of the score.

According to embodiments in a second aspect of the present disclosure, a battery includes the above explosion-proof valve. Since the battery includes the above explosion-proof valve, the battery has at least all of the beneficial effects of the explosion-proof valve. The explosion-proof valve according to the embodiments is provided with the buffer groove, such that the stress on the score can be greatly reduced under the working conditions of battery cell production, pack assembly, and vibration of the whole vehicle, so as to prevent fatigue cracking and failure of the score due to excessive stress on the score. The score can be fractured and opened when the main body is subjected to a pressure above a preset pressure value, thereby ensuring timely pressure relief of the battery cell when the internal air pressure of the battery cell is abnormally increased due to thermal runaway, and preventing the explosion of the battery cell. The score is racetrack-shaped and includes the deep groove section and the shallow groove section, and the depth of the shallow groove section is not zero, which can effectively reduce the set opening pressure of the explosion-proof valve while reducing the manufacturing cost.

Additional aspects and advantages of the present disclosure will be set forth in part in the following description and, in part, will become apparent from the following description, or be learned by practice of the present disclosure.

### BRIEF DESCRIPTION OF DRAWINGS

The present disclosure will be further described below with reference to the accompanying drawings and embodiments, in which:
FIG. 1 is a schematic structural diagram of an explosion-proof valve according to embodiments in a first aspect of the present disclosure;
FIG. 2 is a cross-sectional view of an explosion valve according to a first embodiment of the present disclosure;
FIG. 3 is an enlarged view of portion A in FIG. 2;
FIG. 4 is an enlarged view of portion B in FIG. 2;
FIG. 5 is a cross-sectional view of an explosion valve according to a second embodiment of the present disclosure;
FIG. 6 is an enlarged view of portion C in FIG. 5; and
FIG. 7 is an enlarged view of portion D in FIG. 5.

Reference numerals of the drawings:
main body 100;
score 200, shallow groove section 210, deep groove section 220; and
buffer groove 300.

### DETAILED DESCRIPTION

Embodiments of the present disclosure will be described in detail below, examples of which are illustrated in the accompanying drawings, where the same or similar reference numerals indicate the same or similar elements or elements having the same or similar functions throughout. The embodiments described below with reference to the drawings are illustrative, are intended only to explain the present disclosure, and are not to be construed as limiting the present disclosure.

In the description of the present disclosure, it should be understood that references to orientation descriptions, such as upper, lower, etc., indicating an orientation or positional relationship are based on the orientation or positional relationship shown in the drawings, merely for convenience of description of the present disclosure and simplification of the description, and are not intended to indicate or imply that the devices or elements referred to must have a particular orientation, be constructed and operate in a particular orientation, and therefore are not to be construed as limiting the present disclosure.

In the description of the present disclosure, "a plurality of" means two or more. The description of first and second is only for the purpose of distinguishing the technical features, and cannot be understood as indicating or implying the relative importance or implicitly indicating the number of the technical features indicated or implicitly indicating the sequential relationship of the technical features indicated.

In the description of the present disclosure, unless otherwise expressly defined, terms such as "provide", "install", and "connect" should be interpreted in a broad sense, and those skilled in the art can reasonably determine the specific meanings of the above terms in the present disclosure in combination with the specific contents of the technical solution.

As a key functional part of a battery, an explosion-proof valve can be opened to relieve an internal air pressure of the battery when the internal air pressure of the battery reaches a set pressure of the explosion-proof valve, so as to avoid explosion of the battery. However, at present, there is a problem that the manufacturing cost is relatively high for the explosion-proof valve of the battery with a low set pressure. In order to solve the above technical problems at least to some extent, the present embodiment provides an explosion-proof valve, which can effectively reduce the manufacturing cost of an explosion-proof valve with a low set pressure. The explosion-proof valve according to the present embodiment will be described in detail below with reference to the drawings.

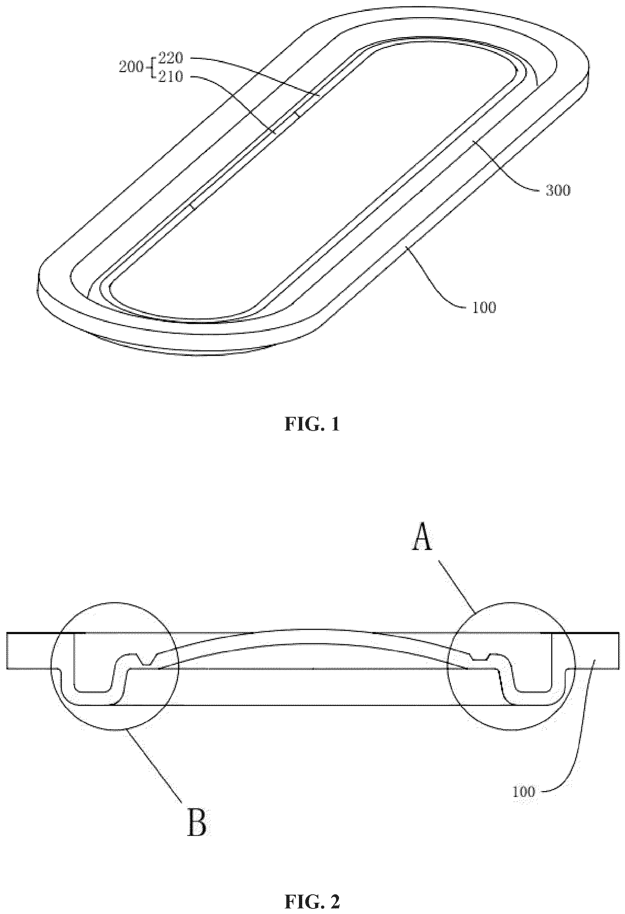

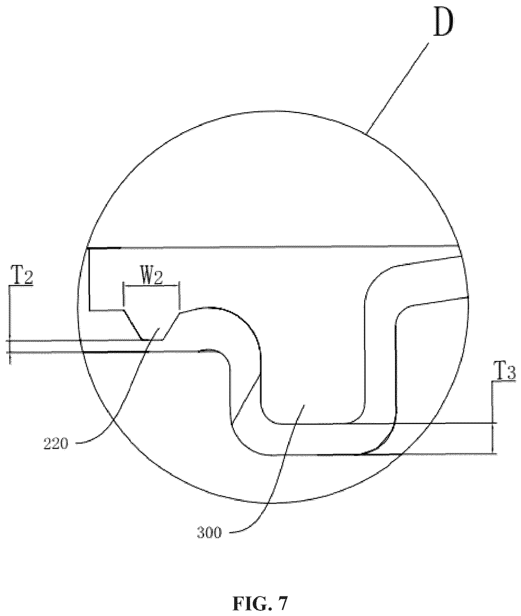

Referring to FIG. 1 to FIG. 7, the explosion-proof valve according to the embodiment of the present disclosure includes a main body 100. The main body 100 is provided with a score 200 and a buffer groove 300. The buffer groove 300 is configured to reduce the stress on the score 200 under the working conditions of battery cell production, pack assembly, and vibration of the whole vehicle, so as to prevent fatigue cracking and failure of the score 200 due to excessive stress on the score 200. The score 200 can be fractured and opened when the main body 100 is subjected to a pressure above a preset pressure value, thereby ensuring timely pressure relief of the battery when the internal air pressure of the battery is abnormally increased due to thermal runaway, and preventing the explosion of the battery. A distance between a bottom wall of the score 200 and a bottom wall of the main body 100 may affect the set pressure of the explosion-proof valve. In general, the larger the distance between the bottom wall of the score 200 and the bottom wall of the main body 100 is, the higher the opening pressure of the explosion-proof valve is, and the smaller the distance between the bottom wall of the score 200 and the bottom wall of the main body 100 is, the lower the opening pressure of the explosion-proof valve is. When the explosion-proof valve needs to be set at a lower opening pressure, the distance between the bottom wall of the score 200 and the bottom wall of the main body 100 needs to be reduced. However, as the distance between the bottom wall of the score 200 and the bottom wall of the main body 100 becomes smaller, the accuracy of manufacturing may be increased, which in turn leads to an increase in cost. Meanwhile, if the distance between the bottom wall of the score 200 and the bottom wall of the main body 100 is too small, the installation difficulty of the whole explosion-proof valve is increased, and the position of the score 200 is prone to damage.

In order to solve the above technical problems at least to some extent, the explosion-proof valve according to this embodiment makes the score 200 in the shape of a complete racetrack, and divides the score 200 into a deep groove section 220 and a shallow groove section 210 according to the depth of the score 200, where a depth of the deep groove section 220 is greater than that of the shallow groove section 210. That is, a distance between a bottom wall of the deep groove section 220 and the bottom wall of the main body 100 is smaller than a distance between a bottom wall of the shallow groove section 210 and the bottom wall of the main body 100. The scores 200 of most current explosion-proof valves are not in the shape of a complete racetrack, but rather have a connecting portion for connecting a peripheral portion and a central portion of the main body 100, and a thickness of the connecting portion is substantially the same as that of the main body 100. That is, the connecting portion of the conventional explosion-proof valve is equivalent to the shallow groove section 210 in this embodiment, and the score 200 of the conventional explosion-proof valve is equivalent to the deep groove section 220 in this embodiment. By making the score 200 in the shape of a complete racetrack and dividing the score 200 into the deep groove section 220 and the shallow groove section 210, the opening pressure of the explosion-proof valve in this embodiment can be significantly reduced under the condition that the depth of the deep groove section 220 in this embodiment is the same as the depth of the conventional score 200. That is to say, if the explosion-proof valve in this embodiment has the same opening pressure as that of the conventional explosion-proof valve, the depth of the deep groove section 220 of the explosion-proof valve in this embodiment can be smaller than the depth of the score 200 of the conventional explosion-proof valve, such that the requirement for the processing accuracy is lower, thereby effectively reducing the production cost. Meanwhile, the shallow groove section 210 can play the same role as the connecting portion of the conventional explosion-proof valve. When the deep groove section 220 is fractured, the shallow groove section 210 can still be configured to connect the peripheral portion and the central portion of the main body 100, thereby preventing the central portion of the main body 100 from flying out and causing injury.

In order to facilitate understanding of the technical solution of this embodiment, referring to FIG. 2 to FIG. 7, let a depth of the shallow groove section 210 be D, the distance between the bottom wall of the shallow groove section 210 and the bottom wall of the main body 100 be T₁, and the distance between the bottom wall of the deep groove section 220 and the bottom wall of the main body 100 be T₂, then D>0, T₁>T₂.

In the embodiment of the present disclosure, let a distance between a bottom wall of the buffer groove 300 and the bottom wall of the main body 100 be T₃, then T₃>T₂, the purpose of which is to ensure that when the internal pressure of the battery cell is increased, the explosion-proof valve is fractured at the position of the score 200 rather than the buffer groove 300, while enabling the buffer groove 300 to provide a better buffer effect, such that the score 200 can be kept intact during the installation of the explosion-proof valve.

In the embodiment of the present disclosure, the main body 100 is racetrack-shaped, and the buffer groove 300 is also racetrack-shaped. The racetrack-shaped main body 100 and buffer groove 300 have a wide range of application, and can be applied to a variety of different batteries. However, the main body 100 and the buffer groove 300 can be changed into other shapes according to actual needs. Similarly, the score 200 can be changed into other shapes according to the actual condition.

In an embodiment of the present disclosure, a depth of the buffer groove 300 is greater than that of the score 200, and/or a width of the buffer groove 300 is greater than that of the score 200. In particular, in some examples, the depth of the buffer groove 300 is greater than that of the score 200, and the width of the buffer groove 300 is greater than that of the score 200. Because the buffer groove 300 mainly serves to protect the score 200, if the width or depth of the buffer groove 300 is smaller than that of the score 200, it is difficult to provide a corresponding technical effect. Therefore, in some examples, the depth of the buffer groove 300 is greater than that of the score 200 and the width of the buffer groove 300 is greater than that of the score 200. It is conceivable that only the depth of the buffer groove 300 is greater than that of the score 200, or only the width of the buffer groove 300 is greater than that of the score 200 according to the actual condition.

In an embodiment of the present disclosure, referring to FIG. 2 to FIG. 7, the distance T₁ between the bottom wall of the shallow groove section 210 and the bottom wall of the main body 100 and the distance T₃ between the bottom wall of the buffer groove 300 and the bottom wall of the main body 100 satisfy: T₃ > T₁. In particular, the distance between the bottom wall of the buffer groove 300 and the bottom wall of the main body 100 being greater than the distance between the bottom wall of the shallow groove section 210 and the bottom wall of the main body 100 can prevent the buffer groove 300 from cracking before the shallow groove section 210 cracks, thereby preventing the central portion of the main body 100 from flying out. However, it is conceivable that the deep groove section 220 of the explosion-proof valve cracks first, so the distance between the bottom wall of the buffer groove 300 and the bottom wall of the main body 100 may also be equal to or less than the distance between the bottom wall of the shallow groove section 210 and the bottom wall of the main body 100. However, in some examples, the distance between the bottom wall of the buffer groove 300 and the bottom wall of the main body 100 is greater than the distance between the bottom wall of the shallow groove section 210 and the bottom wall of the main body 100.

In an embodiment of the present disclosure, a length of the shallow groove section 210 is 1/10 to 1/3 of a total length of the score 200. In particular, it can be seen from the above that the deep groove section 220 mainly plays the role of burst and pressure relief, so the shallow groove section 210 cannot be too long. If the shallow groove section 210 is too long, it may affect the opening of the explosion-proof valve, or cause the opening pressure of the explosion-proof valve to increase. Therefore, based on experience and numerical calculations, in some examples, the length of the shallow groove section 210 is only 1/10 to 1/3 of the total length of the score 200.

In an example, the score 200 according to this embodiment includes one shallow groove section 210 and one deep groove section 220. That is, the score 200 according to this embodiment may not include a plurality of shallow groove sections 210 and a plurality of deep groove sections 220 arranged at intervals. The score 200 including only one shallow groove section 210 and one deep groove section 220 has a better pressure relief effect and a lower manufacturing cost.

In an embodiment of the present disclosure, the shallow groove section 210 has an inverted-trapezoidal cross-section, and/or the deep groove section 220 has an inverted-trapezoidal cross-section. In particular, the deep groove section 220 is provided with an inverted-trapezoidal cross-section, which can effectively increase a burst size of the score 200, and thus improve the burst effect. Because the shallow groove section 210 does not need to be burst, the shallow groove section 210 may be provided with an appropriate cross-sectional shape according to the actual condition. However, designing both the deep groove section 220 and the shallow groove section 210 to have an inverted-trapezoidal cross-section enables the same mould to be used for production of the deep groove section 220 and the shallow groove section 210, thereby reducing the production cost. Therefore, in some examples, the shallow groove section 210 and the deep groove section 220 are both provided with an inverted-trapezoidal cross-section.

In an example, the shallow groove section 210 and the deep groove section 220 have a uniform transition at the connection therebetween, such that the transition stress can be effectively reduced, thereby improving the stability of the explosion-proof valve.

In an embodiment of the present disclosure, the score 200 has a width of 0.2 mm to 0.6 mm at the top thereof. In particular, as can be seen from the above, in some examples, the deep groove section 220 and the shallow groove section 210 have the same cross-sectional shape, and thus the width of the top of the score 200 includes both a width of the top of the deep groove section 220 and a width of the top of the shallow groove section 210. Too large a width of the top of the score 200 may result in poor stability of the explosion-proof valve, and too small a width of the top of the score 200 also tends to affect the stability of the explosion-proof valve. Therefore, in some examples, the width of the top of the score 200 is 0.2 mm to 0.6 mm, within which the explosion-proof valve has a better stability.

In an embodiment of the present disclosure, referring to FIG. 2 to FIG. 7, let the width of the shallow groove section 210 at the top thereof be W₁, and the width of the deep groove section 220 at the top thereof be W₂, where W₁ = W₂. In particular, the width of the top of the deep groove section 220 is the same as the width of the top of the shallow groove section 210, which can reduce the production cost. However, the width of the top of the deep groove section 220 and the width of the top of the shallow groove section 210 can be adjusted according to the actual condition.

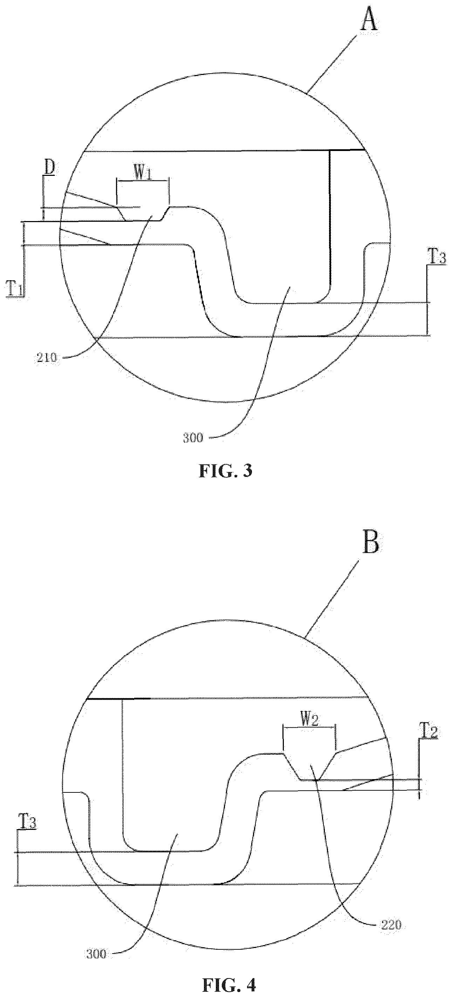

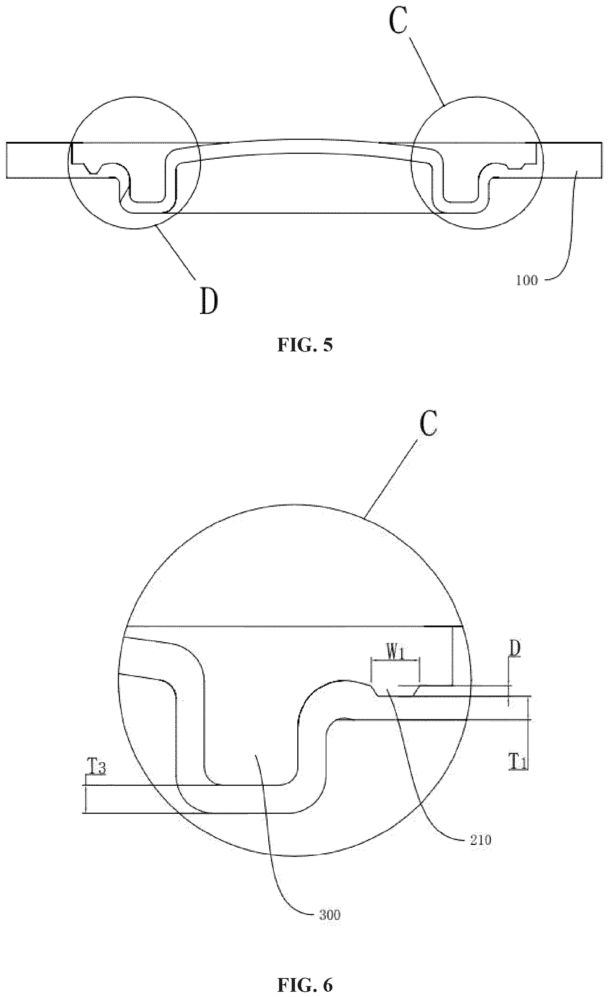

In an embodiment of the present disclosure, the distance T₁ between the bottom wall of the shallow groove section 210 and the bottom wall of the main body 100 has a value ranging from 30µm to 100µm. In particular, referring to FIG. 3 and FIG. 6, it can be seen from the above that the shallow groove section 210 mainly serves to connect the peripheral portion and the central portion of the main body 100. Therefore, in some examples, the distance between the bottom wall of the shallow groove section 210 and the bottom wall of the main body 100 is 30µm to 100µm, which can not only ensure the stability of the explosion-proof valve, but also avoid burst of the shallow groove section 210.

In an embodiment of the present disclosure, the score 200 and the buffer groove 300 may be recessed in the same or opposite directions. For example, the score 200 and the buffer groove 300 as shown in the drawings are recessed in the same direction and both are recessed downwardly. However, depending on the actual condition, the score 200 and the buffer groove 300 may both be designed to be recessed upwardly, or the score 200 may be recessed downwardly and the buffer groove 300 may be recessed upwardly, or the score 200 may be recessed upwardly and the buffer groove 300 may be recessed downwardly.

In an embodiment of the present disclosure, the score 200 is provided at the periphery of the buffer groove 300, or the buffer groove 300 is provided at the periphery of the score 200. In particular, the buffer groove 300 is provided at the periphery of the score 200 as shown in FIG. 2 to FIG. 4, in which the buffer groove 300 provides better protection for the score 200, thereby improving the stability of the explosion-proof valve. The score 200 is provided at the periphery of the buffer groove 300 as shown in FIG. 5 to FIG. 7, in which the buffer groove 300 can be designed to have a larger size without affecting the size of the score 200, while the opening area of the explosion-proof valve is also larger when the explosion-proof valve is burst, such that the rate of pressure relief can be effectively improved, and the risk of explosion of the battery cell due to thermal runaway can be reduced. Any one of the above two options can be selected according to the actual condition.

Embodiments of the present disclosure further disclose a battery, including a cover plate assembly and the above-described explosion-proof valve, where the explosion-proof valve is installed to the cover plate assembly. Since the battery according to this embodiment includes the above-described explosion-proof valve, the battery has at least all of the beneficial effects of the explosion-proof valve, which will not be repeated herein.

In the description of this specification, reference to terms "an embodiment," "some embodiments," "an example," "a specific example," "some examples," or the like means that particular features, structures, materials, or characteristics described in conjunction with the embodiments or examples are included in at least one embodiment or example of the present disclosure. In this specification, schematic expressions of the above terms are not necessarily directed to the same embodiment or example. Moreover, the particular features, structures, materials, or characteristics described may be combined in a suitable manner in any one or more of the embodiments or examples. In addition, those skilled in the art may combine different embodiments or examples described in this specification.

Embodiments of the present disclosure have been described in detail above with reference to the accompany drawings, but the present disclosure is not limited to the above embodiments. Various changes may be made within the knowledge of those ordinary skilled in the art without departing from the purpose of the present disclosure.

## Claims

1. An explosion-proof valve, comprising:
a main body provided with a score and a buffer groove, both the score and the buffer groove being racetrack-shaped,
wherein
the score comprises a deep groove section and a shallow groove section;
the shallow groove section has a depth of D, a distance between a bottom wall of the shallow groove section and a bottom wall of the main body is T₁, and a distance between a bottom wall of the deep groove section and the bottom wall of the main body is T₂; and
a distance between a bottom wall of the buffer groove and the bottom wall of the main body is T₃,
wherein D>0, T₃>T₂, and T₁>T₂.

2. The explosion-proof valve according to claim 1, wherein the distance T₁ between the bottom wall of the shallow groove section and the bottom wall of the main body and the distance T₃ between the bottom wall of the buffer groove and the bottom wall of the main body satisfy: T₃>T₁.

3. The explosion-proof valve according to claim 1, wherein the score is provided at a periphery of the buffer groove, or the buffer groove is provided at a periphery of the score.

4. The explosion-proof valve according to claim 1, wherein a length of the shallow groove section is 1/10 to 1/3 of a total length of the score.

5. The explosion-proof valve according to claim 1, wherein the shallow groove section has an inverted-trapezoidal cross-section, and/or the deep groove section has an inverted-trapezoidal cross-section.

6. The explosion-proof valve according to claim 1, wherein the score has a width of 0.2 mm to 0.6 mm at a top thereof.

7. The explosion-proof valve according to claim 6, wherein the shallow groove section has a width of W₁ at a top thereof, and the deep groove section has a width of W₂ at a top thereof, wherein W₁ = W₂.

8. The explosion-proof valve according to claim 1, wherein the distance T₁ between the bottom wall of the shallow groove section and the bottom wall of the main body has a value ranging from 30µm to 100µm.

9. The explosion-proof valve according to claim 1, wherein a depth of the buffer groove is greater than that of the score, and/or a width of the buffer groove is greater than that of the score.

10. A battery, comprising the explosion-proof valve according to any one of claims 1 to 9.
